# FASCICULE DE BREVET EUROPEEN

(11) **EP 2 417 359 B1**
(45) Date de publication et mention de la délivrance du brevet: **16.12.2015**
(21) Numéro de dépôt: 10717695.0
(22) Date de dépôt: 31.03.2010
(51) Int. Cl.: F04D 27/02, F04D 29/28, B01D 45/14, F02C 7/18, F04D 29/68

(54) **PRÉLÈVEMENT D'AIR AVEC FILTRE INERTIEL DANS LE ROTOR TANDEM D'UN COMPRESSEUR**
LUFTENTNAHME MIT TRÄGHEITSFILTER IM TANDEMROTOR EINES VERDICHTERS
AIR TAPPING WITH INERTIAL FILTER IN THE TANDEM ROTOR OF A COMPRESSOR

(30) Priorité: 06.04.2009 FR 0952227
(43) Date de publication de la demande: 15.02.2012
(73) Titulaire: Turbomeca, 64510 Bordes (FR)
(72) Inventeur: BRILLET, Christophe, Michel, Georges,Marcel, F-64290 Gan (FR); PORODO, Jérôme, Yves, Félix, Gilbert, F-64000 Pau (FR); TARNOWSKI, Laurent, Pierre, F-64000 Pau (FR)
(74) Mandataire: Milien, Jean-Baptiste Aurélien
(86) Numéro de dépôt international: PCT/FR2010/050605
(87) Numéro de publication internationale: WO 2010/116071

(56) Documents cités:
- EP-A- 0 049 655
- WO-A-88/04722
- GB-A- 1 239 196
- US-A- 2 283 176
- US-A- 2 620 123
- US-A- 2 709 893
- US-A- 6 047 540

## Description

La présente invention concerne le domaine technique des systèmes d'air secondaires pour compresseurs centrifuges ou mixtes, et notamment les systèmes d'air secondaires pour des compresseurs centrifuges ou mixtes de turbines à gaz d'aéronefs.

De manière usuelle, une turbine à gaz se compose d'une entrée d'air destinée à capter un gaz comburant, usuellement de l'air, et à l'amener à l'entrée d'un système de compression qui comprime le gaz comburant. Le système de compression se compose d'au moins un compresseur de type mixte ou de type centrifuge, chaque compresseur de type centrifuge comportant au moins un rotor monté sur un arbre de transmission et au moins un stator. Le gaz comburant comprimé par le système de compression est mélangé à du carburant et brûlé au sein d'une chambre de combustion. Au moins une turbine montée sur l'arbre de transmission convertit une partie de l'énergie cinétique des gaz brûlés par la chambre de combustion en énergie mécanique permettant au moins l'entraînement du ou des compresseur(s). Les gaz brûlés échangent de la chaleur avec des pièces chaudes, par exemple la ou les turbine(s), qu'il convient de refroidir afin de limiter leur échauffement.

Dans les turbines à gaz du type comprenant au moins un compresseur centrifuge ou mixte, il est connu de réaliser ce refroidissement au moyen d'un système d'air secondaire adapté pour prélever du gaz comburant au niveau du stator dudit compresseur centrifuge ou mixte. Le prélèvement est usuellement réalisé au moyen d'une pluralité d'orifices de prélèvement disposés tangentiellement à l'écoulement du fluide.

Cependant, le gaz comburant peut comporter des particules polluantes qui colmatent notamment, au moins en partie, lesdits orifices de prélèvement. Ce phénomène de colmatage aboutit à une diminution sensible de la quantité de gaz prélevée par le système d'air secondaire, et par conséquent à une montée en température des pièces chaudes, elle-même à l'origine d'une diminution de leur durée de vie et/ou de leur résistance mécanique.

Par ailleurs, il est connu de prélever le gaz de refroidissement à travers le moyeu du compresseur centrifuge, voir le document GB 1 239 196 A.

Enfin, le rendement global du compresseur centrifuge ou mixte peut être diminué par des perturbations de l'écoulement du gaz comburant le long du rotor de ce compresseur, par exemple par le décollement d'une couche limite de gaz comburant en contact avec ce rotor.

Un premier objet de la présente invention est d'offrir un système d'air secondaire robuste à la pollution du gaz comburant.

Un deuxième objet de la présente invention est d'offrir un système d'air secondaire permettant d'améliorer l'écoulement de l'air au sein d'un compresseur centrifuge ou mixte.

Afin de résoudre au moins un des deux problèmes techniques énoncés ci-dessus, un système d'air secondaire selon l'invention est destiné à être intégré à un compresseur centrifuge ou mixte adapté pour comprimer un gaz comburant, ledit compresseur centrifuge ou mixte comportant un rotor muni d'un axe de rotation.

De manière avantageuse, le système d'air secondaire selon l'invention comporte un système de prélèvement de gaz comburant aménagé dans le rotor du compresseur. Celui-ci permet la centrifugation des particules polluantes éventuellement contenues dans le gaz comburant, ce qui empêche, ou à tout le moins limite, le colmatage progressif du système de prélèvement par lesdites particules polluantes.

De plus, le système d'air secondaire selon l'invention améliore l'aérodynamique du compresseur en assainissant l'écoulement du gaz comburant le long du rotor.

Selon une variante préférée de réalisation, le système d'air secondaire est destiné à être intégré à un compresseur d'une turbine à gaz du type comprenant une chambre de combustion, adaptée pour brûler au moins le gaz comprimé, et au moins une pièce chaude en contact avec les gaz brûlés. Selon cette variante, le système d'air secondaire comporte en outre un système d'acheminement des gaz prélevés à au moins une des pièces chaudes afin d'en abaisser la température.

Selon un mode préférentiel de réalisation, le système d'air secondaire est destiné à être intégré à un compresseur comprenant une surface externe. Selon ce mode de réalisation, le système d'acheminement comporte au moins une cavité interne au rotor, tandis que le système de prélèvement comporte au moins un orifice réalisé sur le rotor. Chaque orifice s'étend à partir de la surface externe, débouche dans au moins une cavité et comprend un axe d'orifice.

Le système d'air secondaire selon l'invention peut en outre comporter au moins l'une des caractéristiques avantageuses suivantes :
- le système d'air secondaire est destiné à être intégré à un compresseur d'une turbine à gaz du type comprenant au moins une turbine,
- le système d'acheminement permet d'envoyer les gaz prélevés vers la turbine,
- le rotor comprend un moyeu et au moins un des orifices est réalisé au niveau du moyeu,
- le système d'air secondaire est destiné à être installé sur un compresseur dont le rotor comprend une pluralité de pales principales et/ou de pales intercalaires,
- chaque pale principale est munie d'un bord d'attaque principal,
- chaque pale intercalaire est munie d'un bord d'attaque intercalaire,
- au moins un orifice est au moins partiellement positionné axialement, relativement à l'axe de rotation, entre un bord d'attaque principal et un bord d'attaque intercalaire,
- chaque pale du type principale ou intercalaire comprend un extrados,
- au moins un orifice est au moins partiellement positionné radialement, relativement à l'axe de rotation, à proximité de l'un des extrados.

Un troisième objet de la présente invention est d'offrir un rotor de compresseur robuste à la pollution du gaz comburant.

A cette fin, un rotor de compresseur selon l'invention comporte un système d'aération secondaire tel que précédemment défini.

Un quatrième objet de la présente invention est d'offrir un compresseur robuste à la pollution du gaz comburant.

A cette fin, un compresseur selon l'invention comprend un rotor tel que précédemment défini.

Un cinquième objet de la présente invention est d'offrir une turbine à gaz robuste à la pollution du gaz comburant.

Un sixième objet de la présente invention est la possibilité d'optimiser le débit de gaz prélevé en fonction de la vitesse de rotation du compresseur.

A cette fin, une turbine à gaz selon l'invention comprend au moins un compresseur tel que précédemment défini.

D'autres caractéristiques et avantages de l'invention apparaîtront mieux à la lecture de la description qui suit de plusieurs modes de réalisation de l'invention donnés à titre d'exemples non limitatifs.

La description se réfère aux figures annexées, sur lesquelles :
- la figure 1 représente une vue en coupe partielle, selon un plan vertical, d'une turbine à gaz dont un compresseur est équipé du système d'air secondaire selon l'invention.
- la figure 2 représente une vue partielle du rotor du compresseur équipé du système d'air secondaire selon l'invention, en coupe selon le plan de la figure 1.
- la figure 3 représente une vue partielle du rotor de la figure 2, dans le plan de coupe III-III défini sur la figure 2.
- la figure 4 une vue partielle du rotor du compresseur équipé d'un système d'air secondaire selon une variante de l'invention, en coupe selon le plan de la figure 1.
- la figure 5 représente une vue partielle du rotor de la figure 4, dans le plan de coupe V-V défini sur la figure 4.

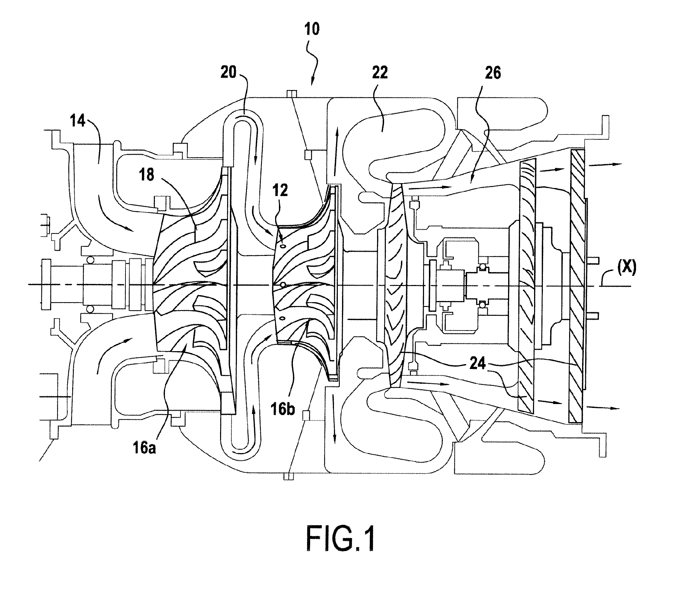

Sur la figure 1, on représente une turbine à gaz 10 équipée d'un système d'air secondaire 12 selon l'invention. Cette turbine à gaz 10 est destinée de manière préférentielle à équiper un aéronef, tel un hélicoptère par exemple.

Le fonctionnement général d'une turbine à gaz 10, connu en soi, ne sera pas traité dans la présente description.

Dans l'exemple de réalisation illustré, la turbine à gaz 10 comporte une entrée 14 adaptée pour capter un gaz comburant, usuellement de l'air, et nommé gaz capté dans la suite du présent texte.

Le gaz capté comporte ou peut comporter de la pollution sous forme de particules en suspension, par exemple des poussières, des pollens ou de la vapeur d'eau.

Le gaz capté est ensuite comprimé dans au moins un étage de compression. Dans cet exemple de réalisation, la turbine à gaz 10 comporte un premier 16a et un deuxième 16b compresseurs centrifuges disposés en série, de sorte que le gaz capté alimente le premier compresseur centrifuge 16a et de sorte que le gaz comprimé par le premier compresseur centrifuge 16a alimente le deuxième compresseur centrifuge 16b.

Chaque compresseur centrifuge 16a, 16b comporte de manière usuelle un rotor 18, mobile en rotation autour d'un axe de rotation (X) et adapté pour accélérer du gaz, et un stator 20 adapté pour convertir au moins une partie de l'énergie cinétique du gaz en augmentation de pression du gaz.

Dans l'exemple de réalisation illustré, le système d'air secondaire 12 selon l'invention est installé sur le deuxième compresseur centrifuge 16b, c'est-à-dire sur le compresseur aval.

Le gaz comprimé par au moins un compresseur 16a, 16b, nommé gaz comprimé dans la suite du présent texte, est ensuite amené dans une chambre de combustion 22 où il est mélangé à un carburant puis brûlé.

Le gaz brûlé dans la chambre de combustion 22, nommé gaz brûlé dans la suite du présent texte, est ensuite acheminé jusqu'à au moins une turbine 24 adaptée pour convertir au moins une partie de l'énergie cinétique des gaz brûlés en énergie mécanique permettant au moins l'entraînement des compresseurs 16a, 16b.

L'ensemble des pièces en contact avec les gaz brûlés constituent les pièces chaudes 26. Les gaz brûlés échangent de la chaleur avec lesdites pièces chaudes 26.

Certaines pièces chaudes doivent être refroidies afin de limiter leur montée en température, par exemple afin d'éviter leur endommagement. Chaque turbine 24 est un exemple de pièce chaude 26 dont il convient de limiter la montée en température afin d'éviter son endommagement. Cet air prélevé peut également être utilisé pour pressuriser certains paliers du moteur.

Selon une variante de réalisation, le système d'air secondaire 12 selon l'invention est installé de manière similaire, mutatis mutandis, sur le premier compresseur centrifuge 16a.

De manière générale, si la turbine à gaz 10 comporte plusieurs compresseurs centrifuges, le système d'air secondaire 12 selon l'invention peut être installé de manière équivalente sur chacun desdits compresseurs centrifuges et/ou sur plus d'un compresseur centrifuge.

Par ailleurs, le système d'air secondaire 12 peut être installé sur tout type de compresseur centrifuge et/ou sur tout type de turbine à gaz comportant au moins un compresseur centrifuge. Par exemple, le système d'air secondaire 12 peut être installé sur une turbine à gaz 10 du type comprenant un compresseur multi-étage muni d'un étage de fin de compression mixte ou centrifuge.

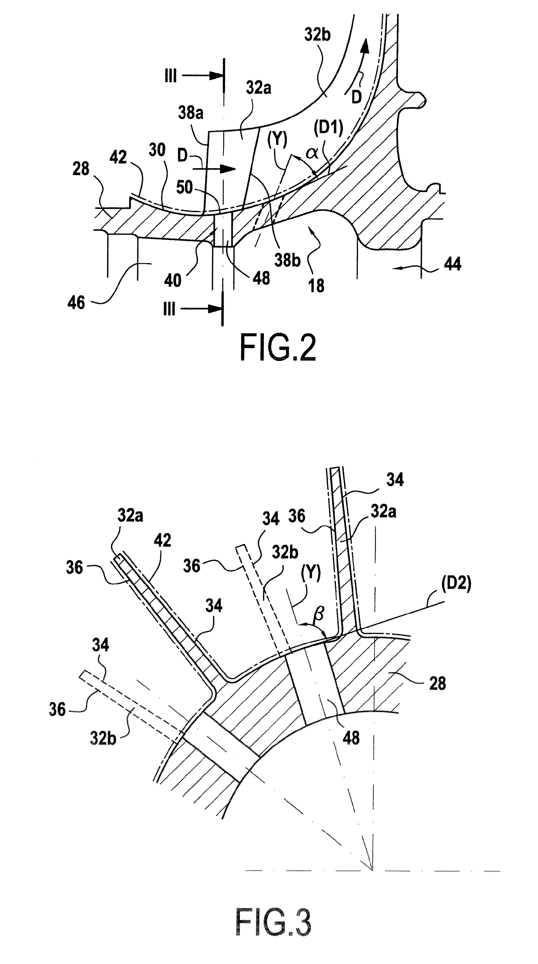

Les Figures 2 et 3 représentent des vues de détail du rotor 18 du deuxième compresseur centrifuge 16b équipé d'un système d'air secondaire 12 selon l'invention.

De manière usuelle, le rotor 18 comprend un moyeu 28 délimité au moins partiellement par une surface externe 30, de laquelle s'étendent une pluralité d'aubes ou de pales de type principale 32a et intercalaire 32b alternées.

Le gaz comburant pénètre axialement dans le rotor 18, relativement à l'axe de rotation (X), et s'écoule ensuite en direction du stator 20 le long de la surface externe 30. La vitesse du gaz comburant augmente tout au long de l'écoulement du fait de l'accélération centrifuge. Le gaz comburant s'écoule, selon un sens d'écoulement D qui est dirigé depuis l'extrémité amont du rotor 18 vers son extrémité aval.

Chaque pale 32a, 32b présente classiquement un intrados 34 et un extrados 36 opposé qui s'étendent à partir de la surface externe 30 du rotor 18. L'extrados 36 est relié à l'intrados 34 par un bord d'attaque principal 38a, pour une pale principale 32a, et par un bord d'attaque intercalaire 38b pour une pale intercalaire 32b.

Selon l'invention, le système d'air secondaire 12 prélève du gaz comburant au niveau du rotor 18. A cette fin, le système d'air secondaire 12 comporte un système de prélèvement 40 de gaz comburant au niveau du rotor 18. Le gaz prélevé par le système de prélèvement 40 est nommé gaz prélevé dans la suite du présent texte.

L'écoulement du gaz comburant le long des pales 32a, 32b du deuxième compresseur 16b s'effectue selon une pluralité de filets fluides non représentés. Les filets fluides sensiblement en contact avec la surface externe 30, l'intrados 34 ou l'extrados 36 des pales 32a, 32b définissent une couche limite 42. La couche limite 42 est sensible au problème de décollement, bien connu de l'homme du métier et qui provoque des turbulences au sein de l'écoulement du gaz comburant, et par conséquent des pertes de rendement du compresseur centrifuge.

Le fait de prélever du gaz comburant au niveau de la couche limite 42 permet avantageusement de minimiser les risques de décollement de la couche limite 42, d'augmenter le rendement global du deuxième compresseur centrifuge 42 et d'assainir l'écoulement du gaz comburant le long des pales 32a, 32b du rotor 18.

Selon un mode préféré de réalisation, le système d'air secondaire 12 achemine le gaz prélevé à au moins une pièce chaude 26, et de préférence à au moins une turbine 24, afin d'en réguler la température. A cette fin, le système d'air secondaire 12 comporte un système d'acheminement des gaz prélevés 44. Le gaz acheminé par le système d'acheminement 44 est nommé gaz acheminé dans la suite du présent texte.

Le fait de prélever le gaz comburant au niveau du rotor 18 permet de centrifuger d'éventuelles particules polluantes contenues dans le gaz comburant, et donc de purifier le gaz comburant. Cela évite l'encrassement du système de prélèvement 40 et donc une diminution au cours du temps de la quantité de gaz comburant prélevé.

Dans l'exemple de réalisation illustré, le système d'acheminement 44 comporte une cavité 46 interne au rotor 18, et le système de prélèvement 40 comporte une pluralité d'orifices 48 réalisé sur le moyeu 28 du rotor 18 et répartis angulairement.

Selon une variante non représentée de l'invention, le système d'acheminement peut comporter une pluralité de cavités connectées ou non. Dans ce cas, chaque cavité peut comporter un ou plusieurs orifices ayant des positions différentes d'une cavité à l'autre.

Chaque orifice 48 s'étend à partir d'une face supérieure 50 aménagée dans la surface externe 30 du rotor 18 et débouche dans la cheminée axiale 46. Chaque orifice s'étend sensiblement selon un axe d'orifice (Y). En outre, chaque orifice 48 a de préférence mais pas exclusivement une forme sensiblement cylindrique, étant précisé que cet orifice peut présenter une section constante ou bien évolutive.

Selon l'invention, chaque orifice 48 est au moins partiellement positionné axialement, relativement à l'axe de rotation (X), entre un bord d'attaque principal 38a et un bord d'attaque intercalaire 38b. Plus particulièrement, la face supérieure 50 de chaque orifice 48 est positionnée axialement, relativement à l'axe de rotation (X), entre un bord d'attaque principal 38a et un bord d'attaque intercalaire 38b.

Chaque orifice 48 est en outre au moins partiellement positionné radialement, relativement à l'axe de rotation (X), à proximité d'un extrados 36. Plus particulièrement, la face supérieure 50 de chaque orifice 48 est positionnée radialement, relativement à l'axe de rotation (X), plus près de l'extrados 36 d'une pale principale 32a que de l'intrados 34 de la pale principale 32a adjacente.

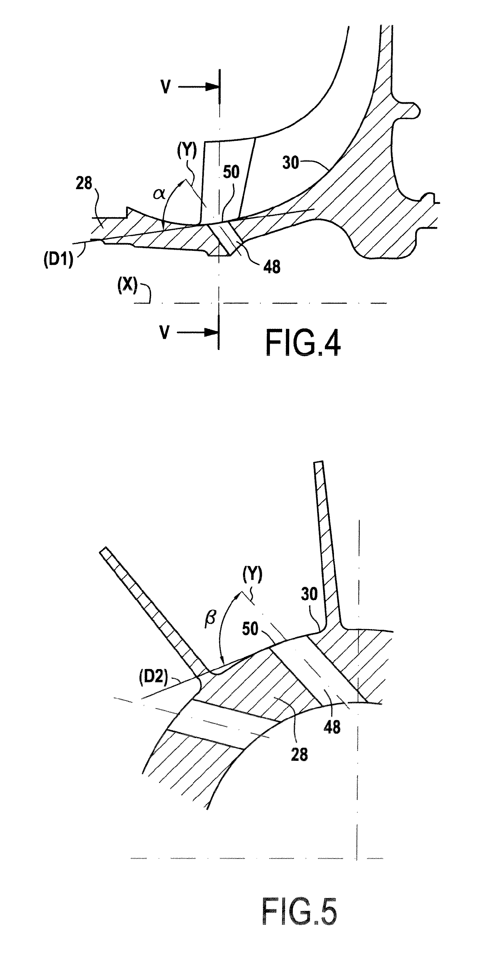

Comme représenté sur la figure 4, un premier angle d'inclinaison α est défini pour chaque orifice comme étant l'angle orienté formé entre une droite (D1) tangente à la surface externe 30 et coplanaire à l'axe de rotation (X), d'une part, et l'axe de l'orifice (Y), d'autre part.

Comme représenté sur la figure 5, un second angle d'inclinaison β est défini pour chaque orifice comme étant l'angle orienté formé entre une droite (D2) tangente à la surface externe 30 et orthogonale à l'axe de rotation (X), d'une part, et l'axe de l'orifice (Y), d'autre part.

Dans le cas où le premier angle α et/ou le second angle β d'un orifice 48 est (sont) compris entre 0 et 90°, l'orifice 48 favorise la résistance à la pollution au détriment de la quantité d'air prélevée par le système d'air secondaire 12. A l'inverse, l'orifice 48 augmente la quantité d'air prélevée par le système d'air secondaire 12 au détriment de la robustesse à la pollution lorsque le premier angle α et/ou le second angle β d'un orifice 48 est (sont) compris entre 90° et 180°.

Ainsi, il est possible de modifier ou d'ajuster le compromis entre la quantité de gaz comburant prélevée et la robustesse à la pollution du le système d'air secondaire 12, en jouant sur le premier angle α et/ou le second angle β de chaque orifice 48 composant ledit système d'air secondaire 12. De plus, il est possible d'ajuster la quantité de gaz comburant prélevé pour une vitesse de rotation du compresseur donnée en jouant sur le premier angle β et/ou le second angle β de chaque orifice 48 composant ledit système d'air secondaire 12.

Par conséquent, le débit d'air circulant à travers chaque orifice 48 peut-être prédéterminé en fixant le premier angle d'inclinaison β à une première valeur prédéterminée et/ou en fixant le second angle d'inclinaison β à une seconde valeur prédéterminée. On comprend donc que pour une vitesse de rotation du compresseur donnée, la valeur du premier ange α et/ou la valeur du second angle β sont des paramètres permettant d'ajuster le débit d'air circulant au travers des orifices 48 à une valeur prédéterminée.

Bien entendu, l'exemple de réalisation des orifices 48 décrit ci-dessus n'a pas de caractère limitatif. Il est par exemple possible de réaliser les orifices sur une autre partie du rotor 18 que le moyeu 28. Il est également possible de réaliser des orifices 48 dont le positionnement axial et/ou le positionnement azimutal et/ou le positionnement radial et/ou le premier angle α et/ou le second angle β est (sont) variable(s).

## Revendications

1. Turbine à gaz (10) comprenant
(a) un compresseur centrifuge ou
mixte (16b) comportant un rotor (18) muni d'un axe de rotation (X), ledit compresseur (16b) étant adapté pour comprimer un gaz comburant, ledit rotor (18) comportant un système d'air secondaire (12),
le système d'air secondaire (12) comportant
un système de prélèvement
de gaz comburant (40) aménagé dans le rotor (18) ; le compresseur (16b) comprenant une surface externe (30),
(b) une chambre de combustion (22)
adaptée pour brûler au moins le gaz comprimé,
(c) au moins une pièce
chaude (26) en contact avec les gaz brûlés, et
(d) un système
d'acheminement (44) des gaz prélevés à la pièce chaude (26) afin d'en abaisser la température, le système d'acheminement (44) comportant au moins une cavité (46) interne au rotor (18) et une pluralité d'orifices (48) réalisée sur le rotor (18), chaque orifice (48) comprenant un axe d'orifice (Y), s'étendant à partir de la surface externe (30) et débouchant dans ladite cavité (46) ;
la turbine à gaz étant **caractérisée en ce que**
le rotor (18) comprend
une pluralité de pales
principales (32a) et de pales intercalaires (32b), chaque pale principale (32a) étant munie d'un bord d'attaque principal (38a) et chaque pale intercalaire (32b) étant munie d'un bord d'attaque intercalaire (38b), au moins un des orifices (48) étant au moins partiellement positionné axialement, relativement à l'axe de rotation (X), entre un bord d'attaque principal (38a) et un bord d'attaque intercalaire (38b).

2. Turbine à gaz (10) selon la revendication 1 comprenant un compresseur (16b) d'une turbine à gaz (10) du type comprenant au moins une turbine (24), **caractérisé en ce que** le système d'acheminement (44) permet d'envoyer les gaz prélevés vers la turbine (24).

3. Turbine à gaz (10) selon la revendication 1 ou 2, **caractérisé en ce que** le rotor (18) comprend un moyeu (28), et **en ce qu'**au moins un des orifices (48) est ménagé dans le moyeu (28).

4. Turbine à gaz (10) selon l'une quelconque des revendications 1 à 3, **caractérisé en ce que** chaque pale du type principale (32a) ou intercalaire (32b) comprend un extrados (36) et un intrados (34) opposé, et **en ce qu'**au moins l'un des orifices (48) est au moins partiellement positionné radialement, relativement à l'axe de rotation (X), plus près de l'extrados (36) d'une pale principale (32a) que de l'intrados (34) d'une pale principale (32a) adjacente.

5. Turbine à gaz (10) selon l'une quelconque des revendications 1 à 4, **caractérisé en ce que** le débit d'air circulant à travers chaque orifice (48) est prédéterminé en fixant un premier angle d'inclinaison (α) défini pour chaque orifice (48) comme étant l'angle orienté formé entre une droite (D1) tangente à la surface externe (30) et coplanaire à l'axe de rotation (X), d'une part, et l'axe de l'orifice (Y), d'autre part, à une première valeur prédéterminée, et/ou en fixant un second angle d'inclinaison (β) défini pour chaque orifice (48) comme étant l'angle orienté formé entre une droite (D2) tangente à la surface externe (30) et orthogonale à l'axe de rotation (X), d'une part, et l'axe de l'orifice (Y), d'autre part, à une seconde valeur prédéterminée.

## Patentansprüche

1. Gasturbine (10) umfassend
(a) einen Zentrifugal- oder Radial-Axial-Verdichter (16b), der einen mit einer Rotationsachse (X) ausgestatteten Rotor (18) umfasst, wobei der Verdichter (16b) dazu ausgelegt ist, ein die Verbrennung förderndes Gas zu verdichten, wobei der Rotor (18) ein Sekundärluftsystem (12) umfasst, wobei das Sekundärluftsystem (12) ein in dem Rotor (18) angeordnetes System zur Entnahme von die Verbrennung förderndem Gas (40) umfasst, wobei der Verdichter (16b) eine Außenfläche (30) umfasst,
(b) eine Brennkammer (22), die dazu ausgelegt ist, wenigstens das verdichtete Gas zu verbrennen,
(c) wenigstens ein heißes Teil (26), das mit den verbrannten Gasen in Kontakt ist, und
(d) ein System zur Beförderung (44) der entnommenen Gase zu dem heißen Teil (26), um dessen Temperatur zu senken, wobei das Beförderungssystem (44) wenigstens einen Hohlraum (46) innerhalb des Rotors (18) und eine an dem Rotor (18) ausgebildete Vielzahl von Öffnungen (48) umfasst, wobei jede Öffnung (48) eine Öffnungsachse (Y), die sich ausgehend von der Außenfläche (30) erstreckt, umfasst und in den Hohlraum (46) mündet,
wobei die Gasturbine **dadurch gekennzeichnet ist, dass** der Rotor (18) eine Vielzahl von Hauptschaufeln (32a) und von Zwischenschaufeln (32b) umfasst, wobei jede Hauptschaufel (32a) mit einer Hauptvorderkante (38a) ausgestattet ist und jede Zwischenschaufel (32b) mit einer Zwischenvorderkante (38b) ausgestattet ist, wobei wenigstens eine der Öffnungen (48) wenigstens teilweise axial, bezogen auf die Rotationsachse (X), zwischen einer Hauptvorderkante (38a) und einer Zwischenvorderkante (38b), positioniert ist.

2. Gasturbine (10) nach Anspruch 1, umfassend einen Verdichter (16b) einer Gasturbine (10) vom Typ umfassend wenigstens eine Turbine (24), **dadurch gekennzeichnet, dass** das Beförderungssystem (44) ermöglicht, die entnommenen Gase zu der Turbine (24) zu leiten.

3. Gasturbine (10) nach Anspruch 1 oder 2, **dadurch gekennzeichnet, dass** der Rotor (18) eine Nabe (28) umfasst und dass wenigstens eine der Öffnungen (48) in der Nabe (28) ausgebildet ist.

4. Gasturbine (10) nach einem der Ansprüche 1 bis 3, **dadurch gekennzeichnet, dass** jede Schaufel vom Haupt- (32a) oder Zwischen-Typ (32b) eine Rückseite (36) und eine gegenüberliegende Vorderseite (34) umfasst und dass wenigstens eine der Öffnungen (48) wenigstens teilweise radial, bezogen auf die Rotationsachse (X), näher an der Rückseite (36) einer Hauptschaufel (32a) als an der Vorderseite (34) einer benachbarten Hauptschaufel (32a) positioniert ist.

5. Gasturbine (10) nach einem der Ansprüche 1 bis 4, **dadurch gekennzeichnet, dass** die durch jede Öffnung (48) zirkulierende Gasmenge dadurch vorbestimmt wird, dass ein erster Neigungswinkel (α), der für jede Öffnung (48) als der orientierte Winkel, gebildet zwischen einer zu der Außenfläche (30) tangentialen und zu der Rotationsachse (X) koplanaren Geraden (D1) einerseits und der Achse der Öffnung (Y) andererseits, definiert ist, auf einen vorbestimmten ersten Wert festgelegt wird und/oder ein zweiter Neigungswinkel (β), der für jede Öffnung (48) als der orientierte Winkel, gebildet zwischen einer zu der Außenfläche (30) tangentialen und zu der Rotationsachse (X) orthogonalen Geraden (D2) einerseits und der Achse der Öffnung (Y) andererseits, definiert ist, auf einen vorbestimmten zweiten Wert festgelegt wird.

## Claims

1. A gas turbine comprising
(a) a centrifugal or mixed-flow compressor (16b) having a rotor (18) presenting an axis of rotation (X), said compressor (16b) being adapted to compress an oxidizer gas, said rotor (18) comprising a secondary air system (12) comprising an oxidizer gas bleed system (40) arranged in the rotor (18); the compressor (16b) having an outer surface (30),
(b) a combustion chamber (22) adapted to burn at least the compressed gas,
(c) at least one hot part (26) in contact with the burnt gas, and
(d) a channeling system (44) for channeling the bleed gas to the hot part (26) in order to lower its temperature, the channeling system (44) including at least one cavity (46) internal to the rotor (18) and a plurality of orifices (48) made in the rotor (18), each orifice (48) having an orifice axis (Y) extending from the outer surface (30) and leading into said cavity (46);
the gas turbine being **characterized in that** the rotor (18) comprises a plurality of main blades (32a) and of intermediate blades (32b), each main blade (32a) being provided with a main leading edge (38a) and each intermediate blade (32b) being provided with an intermediate leading edge (38b), at least one of the orifices (48) being at least partly positioned axially relative to the axis of rotation (X) between a main leading edge (38a) and an intermediate leading edge (38b).

2. A gas turbine (10) according to claim 1 comprising a compressor (16b) of a gas turbine (10) of the type including at least one turbine (24), **characterized in that** the channeling system (44) enables the bleed gas to be sent to the turbine (24).

3. A gas turbine (10) according to claim 1 or claim 2, **characterized in that** the rotor (18) includes a hub (28), and **in that** at least one of the orifices (48) is formed in the hub (28).

4. A gas turbine (10) according to any one of claims 1 to 3, **characterized in that** each blade (32a, 32b) of main or intermediate type comprises opposite suction-side and pressure-side surfaces (36, 34), and **in that** at least one of the orifices (48) is at least partly positioned radially relative to the axis of rotation (X) closer to the suction-side surface (36) of a main blade (32a) than to the pressure-side surface (34) of an adjacent main blade (32a).

5. A gas turbine (10) according to any one of claims 1 to 4, **characterized in that** said flow of air flowing through each orifice (48) is predetermined by setting a first predetermined value for a first angle of inclination (α) defined for each orifice (48) as being the oriented angle formed between a straight line (D1) that is tangential to the outer surface (30) and that is coplanar with the axis of rotation (X), and the axis (Y) of the orifice, and/or by setting a second predetermined value for a second angle of inclination (β) defined for each orifice (48) as being the oriented angle formed between a straight line (D2) that is tangential to the outer surface (30) and that is orthogonal to the axis of rotation (X), and the axis (Y) of the orifice.
